# DEMANDE DE BREVET EUROPEEN

(11) **EP 4 338 923 A1**
(43) Date de publication de la demande: **20.03.2024**
(21) Numéro de dépôt: 23196450.3
(22) Date de dépôt: 11.09.2023
(51) Int. Cl.: B29C 45/14, B29C 45/16, B29C 45/73

(54) **PROCÉDÉ DE MOULAGE DE PANNEAU DE CARROSSERIE**

(30) Priorité: 13.09.2022 FR 2209204
(71) Demandeur: Compagnie Plastic Omnium SE, 69007 Lyon (FR)
(72) Inventeur: MOULIN, Gilles, 01150 Sainte-Julie (FR)
(74) Mandataire: LLR

(57) **Abrégé**

L'invention concerne un procédé de moulage d'un panneau de carrosserie (2) comprenant au moins un motif décoratif réalisé sur un film (4), le procédé comprenant les étapes suivantes :
- Placement du film (4) dans un moule (10),
- Premier moulage d'une première portion (20) du panneau de carrosserie (2) en polycarbonate transparent à la lumière visible, la température du moule (14) étant à régulation thermique renforcée au niveau d'une paroi en contact avec le film,
- Remplacement d'une moitié du moule (14) par une autre moitié du moule (26),
- Second moulage d'une seconde portion (24) du panneau de carrosserie (2) pour encapsuler le film (4) dans le panneau de carrosserie (2) à l'aide d'un second matériau thermoplastique chimiquement compatible avec le polycarbonate transparent à la lumière visible et injecté à une température inférieure à la température d'injection de la première portion (20) du panneau de carrosserie (2).

## Description

L'invention se rapporte à un procédé de moulage de panneaux de carrosserie, plus précisément à celui d'un moulage d'un panneau de carrosserie incluant un film surmoulé dans un corps principal, le film portant au moins un motif décoratif.

Dans une optique de personnalisation des véhicules automobiles, il est connu de réaliser des panneaux de carrosserie comprenant un ou plusieurs motifs décoratifs visibles depuis l'extérieur du véhicule.

Il est connu d'encapsuler un film décoratif dans un corps principal formant un panneau de carrosserie, le film décoratif étant visible au travers du corps principal qui est en partie transparent à la lumière visible. Un tel procédé est par exemple divulgué par la demande de brevet FR 3 104 092 A1.

Compte tenu de la volonté de s'assurer que le panneau de carrosserie ait une tenue aux chocs satisfaisante, des contraintes de moulage peuvent s'appliquer. Par exemple, et dans le cadre de l'utilisation de polycarbonate pour former le corps principal du panneau de carrosserie, il est nécessaire de d'effectuer un moulage par injection du polycarbonate à une température pouvant être comprise entre 250°C et 270 °C, pouvant même excéder les 280°C. On entend par température d'injection la température de la matière plastique injectée en sortie de la buse d'injection. Cette température de moulage permet d'obtenir une tenue à l'impact optimale du panneau de carrosserie, par exemple pour que ce dernier soit conforme aux capacités de tenue à l'impact d'un panneau de carrosserie équipant un véhicule automobile commercialisé.

Cependant, une température de moulage élevée peut poser un problème pour la conservation de l'intégrité du ou des motifs décoratifs portés par un film décoratif. En effet, le ou les motifs décoratifs peuvent être réalisés par dépôt d'un matériau sur le film décoratif. Il peut par exemple s'agir d'une encre déposée par sérigraphie ou encore par jet d'encre. Il peut également s'agir d'un dépôt d'indium pour obtenir un ou des motifs décoratifs transparents aux ondes radar dans le cas où ces motifs décoratifs seraient situés dans une ou des zones du panneau de carrosserie traversées par de tels ondes.

Une température de moulage supérieure à 250°C peut conduire à détériorer le ou les motifs décoratifs. Par exemple, l'indium a une température de fusion bien inférieure à 300°C, de l'ordre de 170-180°C. Au moment du surmoulage du film décoratif par du polycarbonate injecté à une température supérieure à 250°C environ, il est possible d'atteindre la limite de résistance du ou des matériaux formant les motifs décoratifs, ce qui peut conduire à la dégradation de l'aspect visuel de ces derniers. On parle dès lors d'effet de lavage des motifs décoratifs (modification de la forme du ou des motifs décoratifs par déplacement de ces derniers ou encore diminution de l'intensité de leur couleur).

Il serait possible de diminuer la température d'injection du polycarbonate. Cependant, et pour des panneaux de carrosserie qui forment des pièces de grande dimension, cela n'est pas envisageable car :
- une température trop basse pourrait conduire à des problèmes de moulage et à des défauts d'aspect au niveau de la pièce moulée (défauts de remplissage du moule, variations d'épaisseur des panneaux moulés, et
- une baisse de la température de moulage conduirait à sortir de la fenêtre de température d'injection conférant une tenue à l'impact optimale de la pièce moulée, comme expliqué ci-dessus. Cela conduirait donc à une diminution des propriétés mécaniques de la pièce moulée souhaitées en termes de tenue à l'impact.

L'invention a notamment pour but de fournir un procédé de moulage d'un panneau de carrosserie intégrant un film décoratif comprenant un ou des motifs décoratifs tels que décrits ci-dessus, le panneau de carrosserie conservant des propriétés mécaniques satisfaisantes tout en évitant une dégradation des motifs décoratifs lors du moulage.

A cet effet, l'invention a pour objet un procédé de moulage d'un panneau de carrosserie réalisé en deux matériaux thermoplastiques encapsulant au moins en partie un film comprenant au moins un motif décoratif réalisé par dépôt d'un matériau sur au moins une face du film, le procédé comprenant les étapes suivantes :
- Placement du film dans un moule, une première partie du film étant disposée en regard d'une première cavité du moule formée dans une première moitié du moule, et une seconde partie du film étant plaquée contre la paroi d'une seconde moitié du moule,
- Premier moulage d'une première portion du panneau de carrosserie par injection, dans la première cavité du moule, de polycarbonate transparent à la lumière visible, cette première portion surmoulant la première partie du film, la température de la seconde moitié du moule, inférieure à la température d'injection du polycarbonate, étant à régulation thermique renforcée au niveau de la paroi en contact avec le film,

- Remplacement de la seconde moitié de moule par une troisième moitié de moule, et placement de la seconde partie du film en regard de la seconde cavité du moule formée dans la troisième moitié de moule, et
- Second moulage d'une seconde portion du panneau de carrosserie pour encapsuler le film dans le panneau de carrosserie par surmoulage de la seconde partie du film, la seconde portion étant réalisée par injection, dans la seconde cavité du moule, d'un second matériau thermoplastique chimiquement compatible avec le polycarbonate transparent à la lumière visible, la seconde injection étant réalisée à une température inférieure à la température d'injection de la première portion du panneau de carrosserie.

Ainsi, le premier moulage est celui d'un polycarbonate transparent à la lumière visible (pour permettre de visualiser les motifs décoratifs présents sur le film). Cela permet d'appliquer une température de moulage de l'ordre de celles susmentionnées pour obtenir les propriétés mécaniques désirées (i.e. une tenue à l'impact satisfaisante). Lors de ce premier moulage, le film est plaqué contre la paroi d'une moitié de moule refroidie de manière renforcée. Ce plaquage sur une zone de la paroi à régulation thermique par refroidissement renforcé permet de diminuer la température du film du fait de la différence de température locale entre le moule et le polycarbonate transparent à la lumière visible injecté, et donc d'éviter un échauffement du film pouvant conduire à une dégradation des motifs décoratifs.

Lors du second moulage, le film n'est plus en contact avec aucune paroi de moule. Sur sa première face, il est distant et isolé de la première moitié de moule par l'épaisseur de polycarbonate déjà surmoulé. Sur sa seconde face, le second matériau thermoplastique utilisée est injecté à une température inférieure à celle du polycarbonate, ce qui protège le ou les motifs décoratifs. La compatibilité chimique avec le polycarbonate transparent à la lumière visible assure l'obtention d'un panneau de carrosserie dont l'adhérence chimique entre les matériaux le formant est optimale.

On entend par « transparent » une matière ayant une transmission lumineuse comprise entre 80% et 99%. On entend par « chimiquement compatible » une matière apte à créer une adhérence chimique, en particulier sous l'effet de la température de moulage, adhésion conservée après refroidissement du panneau de carrosserie.

On entend par régulation thermique renforcée une capacité à refroidir la seconde moitié de moule lors du premier moulage, au-delà d'une régulation thermique plus classique. En effet, un moule classique est régulé thermiquement pour être globalement à une température comprise entre 80°C et 120°C, par exemple sensiblement égale à 100°C. Dans le cas présent, et pour protéger le ou les motifs décoratifs, la régulation thermique renforcée permet de diminuer, au moins localement à proximité immédiate du film, la température pour qu'elle soit comprise entre 30°C et 50°C, par exemple sensiblement égale à 40°C.

On entend par « partie du film » toute fraction de ce dernier en lien avec les faces du film. Il peut s'agir d'une portion d'une face du film ou de plusieurs zones de plusieurs faces du film, ou encore d'une ou plusieurs faces complètes du film.

Suivant d'autres caractéristiques optionnelles du procédé de moulage prises seules ou en combinaison :
- le film comprend un corps principal réalisé en polycarbonate ;
- le polycarbonate transparent à la lumière visible est injecté à une température comprise entre 270°C et 300 °C, de préférence comprise entre 280°C et 300 °C ;
- le second matériau thermoplastique est injecté à une température comprise entre 220°C et 250 °C, de préférence comprise entre 230°C et 240 °C ;
- le second matériau est choisi parmi les polyuréthanes thermoplastiques ou les élastomères thermoplastiques ;
- la moitié de moule thermiquement régulée au moins localement comprend un circuit fluidique, un fluide de régulation de température circulant à l'intérieur du circuit fluidique pendant le premier moulage ; et
- le motif décoratif est réalisé par un matériau choisi parmi une encre, de l'indium ou un vernis.

### Brève description des figures

L'invention sera mieux comprise à la lecture de la description qui va suivre donnée uniquement à titre d'exemple et faite en se référant aux dessins annexés dans lesquels :
[Fig. 1] est une représentation schématique du premier moulage du procédé de moulage selon l'invention, et
[Fig. 2] est une représentation schématique du second moulage du procédé de moulage selon l'invention.

Les figures étant des représentations schématiques, les formes des différents éléments ou encore les tailles de ces éléments, indépendamment ou les uns par rapport aux autres, sont réalisées aux fins d'illustration sans refléter la réalité d'un panneau de carrosserie.

### Description détaillée

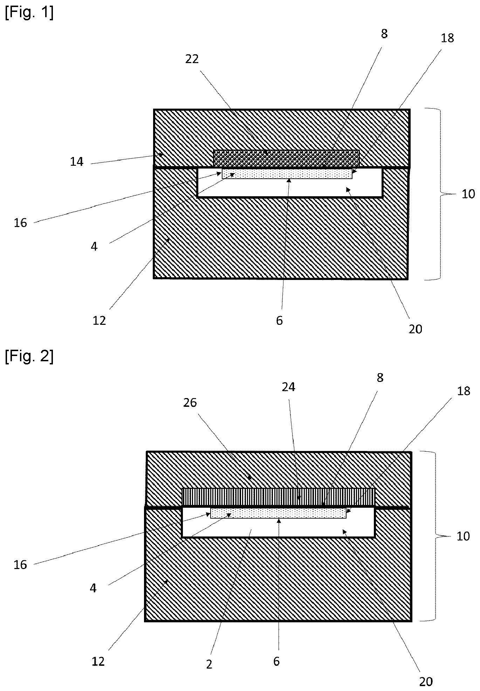

On se réfère désormais à la figure 1 illustrant un premier moulage d'un panneau de carrosserie 2 réalisé en deux matériaux thermoplastiques encapsulant au moins en partie un film 4 comprenant au moins un motif décoratif (non illustré) réalisé par dépôt d'un matériau sur au moins une face du film 4.

Un des deux matériaux thermoplastiques utilisés est du polycarbonate transparent à la lumière visible. L'utilisation de ce dernier permet d'obtenir les propriétés mécaniques énoncées plus haut grâce à la température de moulage énoncée plus haut, et de pouvoir visualiser le motif décoratif. On comprend dès lors que le polycarbonate transparent à la lumière visible forme la partie du panneau de carrosserie 2 visible depuis l'extérieur d'un véhicule automobile lorsqu'il est monté sur un véhicule automobile.

Le second matériau thermoplastique est quant à lui un matériau thermoplastique chimiquement compatible avec le polycarbonate (définition donnée ci-dessus) et pouvant être moulée à une température inférieure à la température de moulage du polycarbonate transparent à la lumière visible dans le but susmentionné de protection du motif décoratif.

Avantageusement, le second matériau thermoplastique est injecté à une température comprise entre 220°C et 250 °C, de préférence comprise entre 230°C et 240 °C.

Le second matériau thermoplastique est avantageusement choisi parmi les polyuréthanes thermoplastiques ou les élastomères thermoplastiques. Ces matériaux peuvent être moulés à une température inférieure à celle de moulage de la première portion du panneau de carrosserie 2 afin d'éviter toute dégradation du ou des motifs décoratifs comme expliqué plus haut.

L'utilisation d'élastomères thermoplastiques est privilégiée car des derniers sont plus souples que les polyuréthanes thermoplastiques. Cette souplesse permet d'éviter qu'une tension s'exerce sur le polycarbonate transparent à la lumière visible après retrait du second matériau thermoplastique. On entend par « retrait » la contraction de la matière plastique au moment de son refroidissement. Les polyuréthanes thermoplastiques et les élastomères thermoplastiques ont un retrait plus important que celui du polycarbonate transparent à la lumière visible. En d'autres termes, les élastomères thermoplastiques, du fait de leur souplesse, n'exerceront pas une contrainte sur le polycarbonate transparent à la lumière visible qui pourrait avoir une incidence sur le panneau de carrosserie 2, par exemple sur sa forme en le galbant de manière excessive.

Le film 4 comprend avantageusement un corps principal lui aussi réalisé en polycarbonate. Il supporte dès lors des températures de moulage élevées, de l'ordre de celles du polycarbonate transparent à la lumière visible.

Au moins un motif décoratif est réalisé sur le film 4 par dépôt d'un matériau sur au moins une face de ce dernier. Le motif décoratif peut par exemple est réalisé sur une première face 6 et/ou une seconde face 8 du film 4, en recouvrant tout ou partie de ces dernières. Le motif décoratif peut être en un matériau choisi parmi une encre, de l'indium ou un vernis. Comme expliqué plus haut, de tels matériaux ont une limite de résistance en température inférieure à une température optimale de moulage du polycarbonate transparent à la lumière visible.

La première étape du procédé de moulage consiste à placer le film 4 comprenant au moins un motif décoratif dans un moule 10. Le film 4 comprend au moins une première partie, ici la première face 6, disposée en regard d'une première cavité du moule 10, ici ménagée dans une première moitié de moule 12 et au moins une seconde partie, ici la seconde face 8, plaquée contre une paroi du moule 10, ici une paroi d'une seconde moitié de moule 14. On notera ici que des faces latérales 16 et 18 du film 4 sont également disposées en regard de la première cavité ménagée dans la première moitié de moule 12. Bien entendu, le nombre de faces (et la fraction de chaque face) plaquées contre une paroi du moule 10 peut varier d'un cas à l'autre. Il serait par exemple possible de plaquer seulement une partie de la seconde face 8 du film 4 contre la seconde moitié de moule 14 (qui prendrait dès lors une forme permettant ce plaquage).

Après la mise en place du film 4 dans le moule 10, le premier moulage d'une première portion 20 du panneau de carrosserie 2 est réalisé par injection de polycarbonate transparent à la lumière visible, cette première portion 20 surmoulant la première partie du film 4 formée par la première face 6 et les faces latérales 16 et 18 (i.e. la partie non plaquée contre une face de la seconde moitié de moule 14), la seconde partie du film 4 formée par la seconde face 8 n'étant pas surmoulée car plaquée contre une paroi du moule 10, ici de la seconde moitié de moule 14.

Avantageusement, le polycarbonate transparent à la lumière visible est injecté à une température comprise entre 270°C et 300 °C, de préférence comprise entre 280°C et 300 °C. Cette température d'injection permet d'obtenir des propriétés mécaniques, notamment une résistance aux chocs, optimales.

Le motif décoratif est avantageusement réalisé sur la première face 6 et/ou la seconde face 8 du film 4, sur tout ou partie de ces dernières. Dans le cas où la seconde face 8 du film 4 porte seule un ou plusieurs motifs décoratifs (ou si le ou les motifs décoratifs sont portés par des faces ou fractions de faces plaquées contre une moitié de moule), le plaquage contre la seconde moitié de moule 14 permet de les protéger de la température de moulage élevée du polycarbonate transparent à la lumière visible.

Dans le cas où la première face 6 du film 4 porte un ou plusieurs motifs décoratifs (ou si le ou les motifs décoratifs sont portés par des faces ou fractions de faces disposées en regard de la première cavité d'injection du polycarbonate transparent à la lumière visible), la seconde moitié de moule 14 assure, grâce à la régulation thermique renforcée, la régulation thermique du film 4 afin que ce dernier conserve une température plus basse que celle d'injection du polycarbonate transparent à la lumière visible, permettant d'éviter le lavage du ou des motifs décoratifs. Comme expliqué plus haut, la seconde moitié du moule 14 permet, grâce à cette régulation thermique renforcée, de diminuer la température de la seconde moitié de moule 14 pour qu'elle soit comprise de préférence entre 30°C et 50°C, par exemple sensiblement égale à 40°C, et donc de protéger le ou les motifs décoratifs contre l'exposition à la température d'injection très élevée du polycarbonate transparent à la lumière visible. La régulation thermique renforcée peut être localisée pour ne refroidir que le film 4, voire seulement la ou les parties du film 4 portant le ou les motifs décoratifs, ou peut-être plus globale et refroidir une zone plus importante que celle à proximité immédiate du film 4. La seconde moitié du moule 14 pourrait comprendre, en plus d'un dispositif permettant une régulation thermique renforcée, des moyens de régulation thermique standard pour refroidir le reste de la seconde moitié de moule 14 pour qu'une portion de cette dernière non refroidie pour être comprise de préférence entre 30°C et 50°C soit refroidie pour être comprise de préférence entre 80°C et 120°C.

La figure 1 illustre une zone 22 régulée thermiquement de manière renforcée. Une régulation thermique locale est avantageusement réalisée au plus proche du film 4 afin qu'elle soit la plus efficace possible.

De préférence, la moitié de moule thermiquement régulée au moins localement, ici la seconde moitié de moule 14, comprend un circuit fluidique, un fluide de régulation de température circulant à l'intérieur du circuit fluidique pendant le premier moulage. Le fluide utilisé est par exemple de l'eau. On obtient dès lors une régulation thermique simple et efficace.

Une fois le premier moulage effectué, la seconde partie du film 4, dans l'exemple illustré la seconde face 8, est dégagée de la paroi de la seconde moitié du moule 14 contre laquelle elle était plaquée et est placée en regard d'une seconde cavité du moule 10 portée par une troisième moitié de moule 26 dans laquelle est formée la seconde cavité du moule 10, la troisième moitié du moule 26 remplaçant la seconde moitié du moule 14, la première moitié du moule 12 restant présente comme illustré sur la figure 2.

Après dégagement de la seconde partie du film 4 et placement de cette dernière en regard de la seconde cavité du moule 10, on réalise un second moulage d'une seconde portion 24 du panneau de carrosserie 2 pour encapsuler le film 4 dans le panneau de carrosserie 2 par surmoulage de la seconde partie du film 4 (ici la seconde face 8), la seconde portion 24 étant réalisée par injection, dans la seconde cavité du moule 10, du second matériau thermoplastique chimiquement compatible avec le polycarbonate transparent à la lumière visible, la seconde injection étant réalisée à une température inférieure à la température d'injection de la première portion 20 du panneau de carrosserie 2.

La figure 2 illustre un second moulage selon l'invention. La ou les faces, ou fractions de faces, non surmoulées lors du premier moulage, ici la seconde face 8, sont surmoulées lors de ce second moulage (les autres faces/fractions de faces étant déjà surmoulées par le polycarbonate transparent à la lumière visible). La seconde face 8 est disposée en regard d'une seconde cavité ménagée dans une troisième moitié de moule 26.

Alternativement à un remplacement d'une moitié de moule par une autre entre les deux étapes de moulage, il serait possible d'utiliser deux moules différents. Il serait dès lors nécessaire d'extraire l'ensemble formé par la première portion 20 du panneau de carrosserie 2 et le film 4 du premier moule pour le placer dans un second moule dans lequel la seconde portion 24 du panneau de carrosserie 2 est moulée.

### Liste de références

2 : panneau de carrosserie
4 : film
6 : première face du film
8 : seconde face du film
10 : moule
12 : première moitié de moule
14 : seconde moitié de moule
16, 18 : faces latérales du film
20 : première portion du panneau de carrosserie
22 : zone régulée thermiquement
24 : seconde portion du panneau de carrosserie
26 : troisième moitié de moule

## Revendications

1. Procédé de moulage d'un panneau de carrosserie (2) réalisé en deux matériaux thermoplastiques encapsulant au moins en partie un film (4) comprenant au moins un motif décoratif réalisé par dépôt d'un matériau sur au moins une face du film (4), le procédé étant **caractérisé en ce qu'**il comprend les étapes suivantes :
- Placement du film (4) dans un moule (10), une première partie (6, 16, 18) du film (4) étant disposée en regard d'une première cavité du moule (10) formée dans une première moitié du moule (12), et une seconde partie (8) du film (4) étant plaquée contre une paroi d'une seconde moitié du moule (14),
- Premier moulage d'une première portion (20) du panneau de carrosserie (2) par injection, dans la première cavité du moule, de polycarbonate transparent à la lumière visible, cette première portion (20) surmoulant la première partie (6, 16, 18) du film (4), la température de la seconde moitié du moule (14), inférieure à la température d'injection du polycarbonate transparent à la lumière visible, étant à régulation thermique renforcée au niveau de la paroi en contact avec le film,
- Remplacement de la seconde moitié du moule (14) par une troisième moitié du moule (26), et placement de la seconde partie (8) du film (4) en regard d'une seconde cavité du moule (10) formée dans la troisième moitié du moule (26),
- Second moulage d'une seconde portion (24) du panneau de carrosserie (2) pour encapsuler le film (4) dans le panneau de carrosserie (2) par surmoulage de la seconde partie du film, la seconde portion (24) étant réalisée par injection, dans la seconde cavité du moule (10), d'un second matériau thermoplastique chimiquement compatible avec le polycarbonate transparent à la lumière visible, la seconde injection étant réalisée à une température inférieure à la température d'injection de la première portion (20) du panneau de carrosserie (2).

2. Procédé de moulage selon la revendication 1, dans lequel le film (4) comprend un corps principal réalisé en polycarbonate.

3. Procédé de moulage selon l'une quelconque des revendications précédentes, dans lequel le polycarbonate transparent à la lumière visible est injecté à une température comprise entre 270°C et 300 °C, de préférence comprise entre 280°C et 300 °C.

4. Procédé de moulage selon l'une quelconque des revendications précédentes, dans lequel le second matériau thermoplastique est injecté à une température comprise entre 220°C et 250 °C, de préférence comprise entre 230°C et 240 °C.

5. Procédé de moulage selon l'une quelconque des revendications précédentes, dans lequel le second matériau est choisi parmi les polyuréthanes thermoplastiques ou les élastomères thermoplastiques.

6. Procédé de moulage selon l'une quelconque des revendications précédentes, dans lequel la seconde moitié de moule (14) thermiquement régulée au moins localement comprend un circuit fluidique, un fluide de régulation de température circulant à l'intérieur du circuit fluidique pendant le premier moulage.

7. Procédé de moulage selon l'une quelconque des revendications précédentes, dans lequel le motif décoratif est réalisé par un matériau choisi parmi une encre, de l'indium ou un vernis.
